**Europäisches Patentamt**

**European Patent Office**

**Office européen des brevets**

(11) Veröffentlichungsnummer: **0 379 892 B1**

## EUROPÄISCHE PATENTSCHRIFT

(45) Veröffentlichungstag der Patentschrift: **10.11.93**

(51) Int. Cl.5: **C08F 291/00**, C08F 2/22, C09D 151/00

(21) Anmeldenummer: **90100488.7**

(22) Anmeldetag: **11.01.90**

(54) **Bindemittel für wässrige Glanzfarben.**

(30) Priorität: **25.01.89 DE 3902103**

(43) Veröffentlichungstag der Anmeldung:
**01.08.90 Patentblatt 90/31**

(45) Bekanntmachung des Hinweises auf die
Patenterteilung:
**10.11.93 Patentblatt 93/45**

(84) Benannte Vertragsstaaten:
**AT BE CH DE DK ES FR GB IT LI NL SE**

(56) Entgegenhaltungen:
**EP-A- 0 242 235**
**EP-A- 0 332 011**

(73) Patentinhaber: **Röhm GmbH**
**Kirschenallee**
**D-64293 Darmstadt(DE)**

(72) Erfinder: **Langerbeins, Klaus, Dr.**
**Uhlandstrasse 56**
**D-6070 Langen(DE)**
Erfinder: **Klesse, Wolfgang, Dr.**
**Tucholskyweg 47**
**D-6500 Mainz 31(DE)**
Erfinder: **Tessmer, Dieter**
**Feuerbachstrasse 77**
**D-6090 Rüsselsheim(DE)**
Erfinder: **Elser, Wilhelm**
**Am Sportfeld 1**
**D-6103 Griesheim(DE)**
Erfinder: **Geyer, Hans-Jürgen**
**Kirschstrasse 47**
**D-6108 Mühltal(DE)**

**Beschreibung**

Die Erfindung betrifft Bindemittel für wäßrige Glanzfarben mit niedriger Mindestfilmbildungstemperatur, hohem Blockpunkt und guten Verlaufeigenschaften, enthaltend in einer wäßrigen Phase dispergierte Teilchen eines mehrphasigen Emulsionspolymerisats.

Stand der Technik

Bindemittel für pigmentierte Anstrichfarben, die Überzüge mit hohem Blockpunkt und mehr oder weniger hohem Glanz ergeben, sind aus der DE-C 26 59 133 bekannt. Sie werden durch Emulsionspolymerisation von Acrylestern in Gegenwart abgebauter Stärke hergestellt.

Aus der DE-A 34 43 964 sind Bindemittel für Anstrichfarben bekannt, die in einer wäßrigen Phase dispergierte Teilchen eines mehrphasigen Emulsionspolymerisats enthalten, das aus einem harten Kernmaterial und einem weichen Schalenmaterial aufgebaut ist. Das Kernmaterial enthält Einheiten eines Carbonsäuremonomers. Am Aufbau des Schalenmaterials können Comonomere mit Ureidogruppen beteiligt sein. Glanz und Verlauf der mit diesen Bindemittels hergestellten Anstriche sind nicht befriedigend.

Aufgabe und Lösung

Es sollte ein Bindemittel für wäßrige Glanzfarben gefunden werden, das sich durch gute Verlaufeigenschaften, eine niedrige Mindestfilmbildungstemperatur und gute Rührstabilität der damit hergestellten Anstrichfarben auszeichnet und dem Anstrich einen hohen Blockpunkt, hohen Glanz und gute Haftung an alkydharzgebundenen Untergründen verleiht.

Die Aufgabe wird durch die Bindemittel gemäß den Patentansprüchen gelöst. Es wurde gefunden, daß die geforderten Eigenschaften bei einem mehrphasigen Emulsionspolymerisat erreichbar sind, wenn die Latexteilchen des Emulsionspolymerisats eine geringe Größe haben und wenn das Kernmaterial hart und das Schalenmaterial weich sind und dieses weitgehend aus stark hydrophoben Monomeren sowie einem verhältnismäßig großen Anteil an carboxylgruppenhaltigen Monomeren aufgebaut ist. Es wurde weiterhin festgestellt, daß durch einen speziellen Einbau von stickstoffhaltigen Haftmonomeren in das Schalenmaterial auch in Gegenwart von Carbonsäuregruppen eine vorzügliche Haftung an alten Alkydharzuntergründen erreicht wird.

Ausführung der Erfindung

Der wesentliche Bestandteil des erfindungsgemäßen Bindemittels ist das mehrphasige Emulsionspolymerisat. Es wird durch mehrstufige Emulsionspolymerisation in wäßriger Phase erzeugt, wobei das in der ersten Stufe erzeugte Polymerisat als Kernmaterial und das in den nachfolgenden Stufen erzeugte Polymerisat als Schalenmaterial bezeichnet wird.

Als "Phase" wird dabei ein Emulsionspolymerisat bezeichnet, das in einem zeitlich begrenzten Abschnitt der mehrstufigen Emulsionspolymerisation erzeugt wird und dessen Zusammensetzung sich von der der vorausgehenden bzw. nachfolgenden Phase unterscheidet. Man spricht auch von Mehrstufen-Emulsionspolymerisation oder Pfropfpolymerisation. Die Phasen können in jedem Latexteilchen einen kugelförmigen Kern und eine oder mehrere, den Kern umgebende Schalen bilden, jedoch ist eine solcher Aufbau für die erfindungsgemäßen Emulsionspolymerisate weder erwiesen noch grundsätzlich erforderlich. Es wird jedoch angenommen, daß die Phasen auf jeden Fall räumlich voneinander geschiedene, aber einander berührende Domänen bilden.

In der ersten Stufe werden die Teilchen gebildet, die in den nachfolgenden Stufen auf ihre endgültige Größe weiterwachsen. Nach Abschluß der ersten Stufe werden in der Regel keine oder wenig neue Teilchen gebildet.

Der mittlere Teilchendurchmesser wird in an sich bekannter Weise durch die Anzahl der entstehenden Latexteilchen gesteuert. In der Regel werden bereits zu Beginn der ersten Stufe alle Teilchen gebildet. Die Konzentration des Emulgiermittels in der Anfangsphase der Emulsionspolymerisation hat daher entscheidenden Einfluß auf die Teilchenzahl und damit auf die Teilchengröße. Sobald die ursprünglich gebildeten Latexteilchen zu wachsen beginnen, adsorbieren sie den verfügbaren Emulgator an ihrer schnell wachsenden Oberfläche, so daß keine neuen Wachstumskeime mehr gebildet werden. Üblicherweise gibt man im Laufe der Emulsionspolymerisation weiteres Emulgiermittel hinzu, um die neu entstehende Polymerisatoberfläche ausreichend mit Emulgiermittel abzudecken. Dabei sollte aber ein Anstieg der freien Emulgiermittelkonzentration über die kritische Mizellbildungskonzentration zu jedem Zeitpunkt nach der Teilchenbildungsphase möglichst vermieden werden. Das verfügbare Monomer bzw. Monomerengemisch wird dann ausschließlich für das Wachstum der ursprünglichen Keime verbraucht.

Das Verhältnis der Wasserphase zur Gesamtmenge der in beiden Stufen verwendeten Monomeren wird entsprechend dem gewünschten Feststoffgehalt der herzustellenden Kunststoffdispersion gewählt; er liegt meistens zwischen 30 und 60 Gew.-%. Das Monomer bzw. Monomerengemisch zur Bildung der ersten Stufe kann insgesamt im Polymerisationsgefäß in Form einer wäßrigen Emulsion vorgelegt oder teilweise oder ganz im Laufe der ersten Stufe zudosiert werden. Nach dessen Polymerisation wird das Monomer oder das Monomerengemisch für die zweite Stufe auf einmal oder allmählich zugesetzt und ebenfalls polymerisiert. In gleicher Weise kann eine dritte Stufe folgen. Die Polymerisation wird in allen Stufen durch übliche radikalische Initiatoren, wie Alkali- oder Ammonium-peroxodisulfat, Azo-bis-isobutyronitril, 4,4'-Azo-bis-cyanvaleriansäure, tert.-Butylperpivalat oder tert.-Butylhydroperoxid ausgelöst. Zur Bildung eines Redox-Systems können zusammen mit den peroxidischen Initiatoren reduzierende Verbindungen eingesetzt werden, beispielsweise Natriumpyrosulfit, Natriumhydroxymethylsulfinat oder Ascorbinsäure, gegebenenfalls in Kombination mit Schwermetallsalzen, wie Eisen-II-Sulfat. Die Polymerisationstemperatur liegt in der Regel zwischen 20 und 90°C und wird durch Kühlung des Ansatzes aufrechterhalten.

Als Emulgiermittel eignen sich die üblichen wasserlöslichen Emulgatoren vom anionischen, kationischen oder nichtionischen Typ.

Da die erfindungsgemäßen Kunststoffdispersion sehr kleine Teilchen enthalten, muß in der Anfangsphase eine große Zahl von Keimen gebildet und eine entsprechend hohe Emulgatorkonzentration eingestellt werden. Die geeignete Emulgiermittelmenge wird für das jeweilige Polymerisationssystem durch Vorversuche ermittelt, indem man von einer üblichen Emulgatormenge, beispielsweise 0,5 Gew.-%, bezogen auf die Wasserphase, ausgeht und, falls die entstehenden Teilchen zu groß oder zu klein sind, die Emulgiermittelmenge beim nächsten Vorversuch vergrößert oder verkleinert. Im übrigen sind dem Fachmann Maßnahmen zur Beeinflussung der Teilchengröße bekannt; vgl. Sütterlin, Kurth, Markert in "Makromolekulare Chemie", 177 (1976), S.1549-1565.

Unter dem Ausdruck "mittlerer Teilchendurchmesser" wird hier der Gewichtsmittelwert des Teilchendurchmessers verstanden. Er kann nach bekannten Methoden, beispielsweise durch Trübungs- oder Streulichtmessungen, ermittelt werden. Besonders geeignet ist die Methode der Photonen-Korrelations-Spektroskopie. Die Teilchengröße soll unter 200 nm, vorzugsweise unter 170 nm und insbesondere unter 140 nm liegen. Im Bereich von 80 bis 120 nm wurden die vorteilhaftesten Ergebnisse erzielt.

Der Aufbau des Kern- und des Schalenmaterials

Das Kernmaterial, das in der ersten Polymerisationsstufe gebildet wird, ist durch eine Glasübergangstemperatur über 40°C, vorzugsweise 90 bis 150°C, gekennzeichnet. Am Aufbau des Kernmaterials sind überwiegend hartmachende Monomere beteiligt; darunter werden Monomere verstanden, deren Homopolymere eine Glasübergangstemperatur von mindestens 80°C haben, z.B. Styrol, alpha-Methylstyrol, Acryl- und Methacrylnitril, Methyl-, Äthyl-, Isopropyl-, sec. Butyl-, Cyclohexyl-methacrylat oder Vinylchlorid. Vernetzende Comonomere mit zwei oder mehr, beispielsweise 2 bis 6, polymerisierbaren Kohlenstoff-Doppelbindungen im Molekül, wie Vinyl- oder Allylacrylat oder -methacrylat, Dioldiacrylate und -methacrylate, Methylen-bis-acrylamid oder -methacrylamid, werden vorzugsweise in üblichen geringen Mengen, z.B. 0,01 bis 5 Gew.-%, mitverwendet und wirken sich vorteilhaft auf die hier diskutierten Produkteigenschaften, wie Mindestfilmbildungstemperatur, Filmhärte oder -klebrigkeit oder den Blockpunkt aus.

Das Kernmaterial macht 5 bis 45 Gew.-% des gesamten Emulsionspolymerisats aus und somit auch einen gleichgroßen Anteil an dem insgesamt verarbeiteten Monomerengemisch. Vorzugsweise liegt der Anteil des Kernmaterials bei 10 - 40 %.

Das Schalenmaterial macht dementsprechend 95 bis 55, bevorzugt 90 bis 60 Gew.-% des mehrstufigen Emusionspolymerisats bzw. der zu seiner Herstellung eingesetzten Monomerengemische aus. Für das Schalenmaterial ist eine Glasübergangstemperatur unter 70°C, vorzugsweise 0 bis 50°C, charakteristisch. In jedem Fall liegt die Glasübergangstemperatur des Schalenmaterials wenigstens 20 Kelvin-Grad (K) unter der des Kernmaterials.

Diese Eigenschaft sowie der erfindungsgemäß erforderliche hydrophobe Charakter des Schalenmaterials werden durch seinen überwiegenden Aufbau aus Alkylestern der Acryl- und Methacrylsäure mit mindestens 4 Kohlenstoffatomen im Alkylrest und gegebenenfalls Styrol gewährleistet. Bevorzugte Ester dieser Gruppe sind n-Butylacrylat und -methacryiat und 2-Äthylhexyl-acrylat und -methacrylat. Styrol kann soweit mitverwendet werden, wie die Glasübergangstemperatur des Schalenmaterial den Grenzwert von 70°C nicht überschreitet, jedoch wird sein Anteil im Interesse einer hohen Witterungsbeständigkeit vorzugsweise unter 10 Gew.-%, insbesondere unter 5 Gew.-% des Schalenmaterials gehalten. Niedere Alkylester der Acryl-und/oder Methacrylsäure mit mit 1 bis 3 Kohlenstoffatomen im Alkylrest verleihen dem Schalenmaterial hydrophile Eigenschaften und dürfen daher höchstens in einem Anteil von 30 Gew.-%, vorzugsweise unter 10 Gew.-% vorhanden sein.

Ein wesentlicher Bestandteil des Schalenmaterials ist ein Carboxylgruppen aufweisendes Emulsionspolymerisat. Die carboxylgruppentragenden Einheiten machen mindestens 4 Gew.-%, vorzugsweise 5 bis 15 Gew.-%, bezogen auf das Gewicht des in dieser Stufe erzeugten Emulsionspolymerisats, aus. Sie werden aus äthylenisch ungesättigten, radikalisch polymerisierbaren Carbonsäuren, wie Acryl- und/oder Methacrylsäure, Malein-, Fumar- oder Itakonsäure gebildet. Es ist vorteilhaft, die ungesättigte Carbonsäure nicht gleichmäßig in das Schalenmaterial einzubauen, sondern sie in einem begrenzten Zeitabschnitt während der Polymerisation der Monomeren einer Stufe in entsprechend höherer Konzentration zuzusetzen.

Vorzugsweise ist am Aufbau des Schalenmaterials ein stickstoffhaltiges Haftmonomer beteiligt. Sein Anteil kann z.B. 1 bis 10 Gew.-% des Schalenmaterials betragen. Dazu gehören äthylenisch ungesättigte, radikalisch polymerisierbare Monomere mit einer Amino-, Ureido- oder N-heterocyclischen Gruppe, wie Dialkylaminoalkylester und Dialkylaminoalkylamide der Acryl- und/oder Methacrylsäure, insbesondere solche mit 1 bis 5 Kohlenstoffatomen in den Alkylresten, radikalisch polymerisierbare Derivate des Harnstoffs oder des Äthylen- oder Propylenharnstoffs. Beispiele für Haftmonomere sind Dimethylaminoäthyl-acrylat und -methacrylat, Diäthylaminoäthyl-acrylat und -methacrylat, Dimethylamino-propyl-acrylat und -methacrylat, 3-Dimethylamino-2,2-dimethylpropyl-1-acrylat und -methacrylat, 2-N-Morpholino-athyl-acrylat und -methacrylat, 2-N-Piperidino-äthyl-acrylat und -methacrylat, N-(3-Dimethylaminopropyl)-acrylamid und methacrylamid, N-(3-Dimethylamino-2,2-dimethylpropyl)-acrylamid und -methacrylamid, N-Dimethylaminomethyl-acrylamid und -methacrylamid, N-Diäthylaminomethyl-acrylamid und -methacrylamid, N-(4-Morpholinomethyl)-acrylamid und -methacrylamid, Vinylimidazol, Vinylpyrrolidon, N-(2-Methacryloyloxyäthyl)-äthylenharnstoff, N-(2-methacryloxyacetamidoäthyl)-N,N'-äthylenharnstoff, Allylalkyläthylenharnstoff, N-Methacrylamidomethyl-harnstoff, N-Methacryloyl-harnstoff, N-(3-[1,3-Diazacyclohexan-2-on]-propyl)-methacrylamid, 2-(1-Imidazolyl)-äthylmethacrylat, 2-(1-Imidazolidin-2-on)-äthyl-methacrylat. Besonders bevorzugt ist N-(2-Methacryloyloxyäthyl)-äthylenharnstoff.

Um störende Wechselwirkungen zwischen den mehr oder weniger basischen Haftmonomeren und den carboxylgruppenhaltigen Monomeren zu vermeiden, hat es sich bewährt, daß das Schalenmaterial aus zwei Phasen, d.h. aus zwei in getrennten Stufen erzeugten Emulsionspolymerisaten besteht, von denen das eine die überwiegende oder gesamte Menge, z.B. 90 - 100 %, der äthylenisch ungesättigten, radikalisch polymerisierbaren Carbonsäure und das andere die überwiegende oder gesamte Menge, z.B. 90 - 100 %, des Haftmonomeren enthält. Der erfindungsgemäß anzuwendende Anteil der ungesättigten Carbonsäure ist immer auf das Gewicht der jeweils erzeugten Phase bezogen. Vorzugsweise wird die Phase, die das Haftmonomer enthält, nach der Phase, die die ungesättigte Carbonsäure enthält, erzeugt. Das Mengenverhältnis der beiden Phasen, die zusammengenommen das Schalenmaterial bilden, kann z.B. zwischen 10 : 1 und 1 : 10 liegen und beträgt vorzugsweise 2 : 1 bis 1 : 2. Im übrigen gilt für beide Phasen in gleicher Weise das zum Aufbau des Schalenmaterials Gesagte.

Selbstverständlich können bei der Herstellung der neuen Kunststoffdispersionen allgemeine Erkenntnisse auf dem

Gebiet der Emulsionspolymerisation in sachgerechter Weise angewendet werden. Dies betrifft z.B. die Mitverwendung spezieller Comonomerer beim Aufbau des Kern- oder Schalenmaterials, die Einstellung des Molekulargewichts, bestimmter Teilchengrößenverteilungen oder die Anwendung bekannter Maßnahmen zur Verbesserung der Rührstabilität, der Pigmentierbarkeit oder der Froststabiltät.

Zur Herstellung von Glanzfarben wird die Dispersion - in der Regel mit Ammoniak - auf einen pH-Wert im alkalischen Bereich, vorzugsweise pH 7 bis 9, eingestellt. Anorganische oder organische Pigmente werden in einer Pigment-Volumen-Konzentration von etwa 5 bis 30 eingesetzt, wobei jedoch in Abhängigkeit von den jeweiligen Pigmenteigenschaften die Grenze einzuhalten ist, oberhalb derer Glanz und Verlauf nicht mehr befriedigen. Diese Grenze wird bei organischen Pigmenten oft früher als bei anorganischen erreicht. Der erreichbare Verlauf wird durch die Mitverwendung von sog. assoziativen Verdickern wesentlich beeinflußt. Darunter werden wäßrige Dispersionen von Mischpolymerisaten aus ungesättigten Carbonsäuren, deren Alkyl- und Polyalkoxyalkylestern verstanden; geeignete Emulsionspolymerisate dieser Art sind z.B. in der EP-B 11 806 beschrieben. Der Anteil solcher Verdickungsmittel kann zwischen 1 und 10 Gew.-%, bezogen auf das in dem erfindungsgemäßen Bindemittel enthaltene Emulsionspolymerisat, liegen. Weitere übliche Zusätze für wäßrige Glanzfarben sind Filmbildungshilfsmittel, d.h. hochsiedende Lösungsmittel für das Emulsionspolymerisat, Zusätze zur Verbesserung des Wasserrückhaltevermögens und zur Verzögerung des Antrocknens, wie Äthylen- oder Propylenglykol, Dispergierhilfsmittel, wie Ammonium-polyacrylat, Entschäumungsmittel u.dergl.

4

Die Viskosität der Farbe wird mit Wasser auf einen Wert im Bereich von 500 bis 10 000 mPa s eingestellt. Sie kann mit allen gebräuchlichen Methoden, d.h. durch streichen, rollen, spritzen, tauchen, gießen, rakeln oder drucken in einer Schichtdicke von 20 bis 100 Mikrometer auf das zu beschichtende Substrat aufgebracht werden. Dieses kann beispielsweise aus Metall, Holz, Kunststoff, Papier, Karton, Beton, Mauerwerk, Glas oder Keramik bestehen. Die Haftung auf vielen Substraten, insbesondere auf alten alkydharzgebundenen Anstrichuntergründen, wird durch einen Gehalt an Haftmonomeren in dem Schalenmaterial des Bindemittels wesentlich verbessert.

Die mit den erfindungsgemäßen Bindemitteln erzeugten Anstriche zeichnen sich durch einen hervorragenden Verlauf aus. Beim Streichen mit dem Pinsel sind nach dem Auftrocknen keine Pinselfurchen mehr zu erkennen. Nach vollständiger Trocknung weisen die Anstriche hohen Glanz und gute Blockfestigkeit auf.

BEISPIELE

A. Herstellung von Bindemitteldispersionen

Beispiel 1.

In einem Reaktionsgefäß mit 2 l Fassungsvermögen ausgerüstet mit Rückflußkühler, Rührwerk und Zulaufgefäß, werden 0,99 g C15-Paraffinsulfonat-Na-Salz und 0,4 g Ammoniumperoxodisulfat in 400 g entsalztem Wasser bei 20 Grad C gelöst.

Zu dieser Lösung werden nacheinander die folgenden 3 Emulsionen bei 80 Grad C unter Rühren zudosiert. Die 1. Emulsion besteht aus:

76,95 g Methylmethacrylat
76,95 g Isobutylmethacrylat
8,1 g Allylmethacrylat
2,77 g C15-Paraffinsulfonat, Na-Salz
0,24 g Amoniumperoxodisulfat
130,0 g entsalztes Wasser
Sie wird innerhalb von 48 Minuten zugegeben.

Nach einer Pause von 20 Minuten wird die 2. Emulsion, bestehend aus:

247,05 g Butylmethacrylat
44,55 g Butylacrylat
32,4 g Methacrylsäure
5,54 g C15-Paraffinsulfonat, Na-Salz
0,49 g Ammoniumperoxodisulfat
260,0 g entsalztes Wasser
innerhalb von 96 Minuten zugegeben.

Nach weiteren 20 Minuten Pause wird die 3. Emulsion zugegeben:

247,05 g Butylmethacrylat
44,55 g Butylacrylat
32,4 g N-(2-Methacryloyloxyethyl)ethylenharnstoff
5,54 g C15-Paraffinsulfonat, Na-Salz
0,49 g Ammoniumperoxodisulfat
260,0 g entsalztes Wasser
Danach wird der Ansatz noch eine Stunde bei 80 Grad C gehalten und dann auf Raumtemperatur abgekühlt. Bei 70 Grad C Werden 0,66 g 1,4-Diisopropylbenzolmonohydroperoxid und 0,28 g Natriumhydroxymethylsulfinat zugegeben. Nach Einstellung der Dispersion auf pH 9,0 werden 29,7 g Octylphenoxypolyethoxyethanol (mittlerer Ethoxylierungsgrad 9) zugesetzt.
Dann wir die Dispersion filtriert. Sie hat einen Trockengehalt von 45 %.

Beispiele 2 - 4

Nach dem in Beispiel beschriebenen Verfahren werden weitere Dispersionen hergestellt, wozu wäßrige Emulsionen 1, 2 und 3 mit den in Tabelle 1 angegebenen Zusammensetzungen verwendet werden. Die Dispersion nach Beispiel 2 hat pH 2,3.

TABELLE 1

| Beisp. Nr. | Emulsion | Polymerisatzusammensetzung | | MFT | Brookfiled Viskosität (mPa s) | Teilchendurch- messer (nm) |
|---|---|---|---|---|---|---|
| 1 | 1 | A - B - E | = 47,5 - 47,5 - 5 | | | |
|   | 2 | C - D - F | = 76,25 - 13,75 - 10 | | 5 900 | 110 |
|   | 3 | C - D - G | = 76,25 - 13,75 - 10 | | | |
| 2 | 1 | A | = 100 | | | |
|   | 2 | C - D - F | = 76,25 - 13,75 - 10 | | | |
|   | 3 | C - D - G | = 76,25 - 13,75 - 10 | | 8 000 | 100 |
| 3 | 1 | A - E | = 95 - 5 | | | |
|   | 2 | C - D - A - F | = 55 - 25 - 10 - 10 | | 36 500 | 90 |
|   | 3 | C - D - A - G | = 55 - 25 - 10 - 10 | | | |
| 4 | 1 | A - E | = 95 - 5 | | | |
|   | 2 | C - D - F | = 76,25 - 13,75 - 10 | 35°C | 7 000 | 100 |
|   | 3 | C - D - G | = 76,25 - 13,75 - 10 | | | |

A = Methylmethacrylat  
B = Isobutylmethacrylat  
C = Butylmethacrylat  
D = Butylacrylat  

E = Allylmethacrylat  
F = Methacrylsäure  
G = N-(2-Methacryloyloxyethyl)ethylenharnstoff

EP 0 379 892 B1

B. Herstellung und anwendungstechnische Prüfung von Dispersionsglanzfarben

Zusammensetzung von 1 000 Gew.-Teilen der Farbe

10 Gew.-Teile Wasser
2 Gew.-Teile Ammoniak, 25 %ig
5 Gew.-Teile Dispergierhilfsmittel (40 % Trockengehalt, Ammoniumpolyacrylat)
4 Gew.-Teile Entschäumer
14 Gew.-Teile Filmbildungshilfsmittel (nicht wasserlösliches hochsiedendes Lösungsmittel wie Glykoletheracetat, oder Dicarbonsäureester z.B. Lusolvan FBH)
48 Gew.-Teile Propylenglykol (zur Verlängerung der offenen Zeit und zur Verbesserung des Wasserrückhaltevermögens)
215 Gew.-Teile Titandioxid, Rutil-Typ.
    Die Mischung wird 20 Minuten bei 4500 upm dispergiert. Dann werden zugesetzt:
617 Gew.-Teile Dispersion nach Beispiel 1 - 5
85 Gew.-Teile Assoziativer Verdicker auf Acrylharzbasis mit 10 % Polymergehalt
Durch Zusatz von Wasser wird die Farbe auf eine Viskosität von 500 bis 10 000 mPa s eingestellt. Die Pigment-Volumen-Konzentration muß mit der Art des Pigments abgestimmt werden. Dabei ist zu berücksichtigen, daß organische Pigmente weniger Glanz ergeben als anorganische Pigmente.

    Zur Ermittlung des Blockpunktes wird ein schwach saugendes Papaier mittels eines Ziehlineals mit einer 0,1 mm dicken Schicht der Farbe beschichtet und 8 Stunden bei 60 Grad C getrocknet. Aus dem Papier werden 2,5 X 17 cm große Streifen geschnitten, in der Mitte so gefaltet, daß die beschichteten Seiten aufeinanderliegen, und bei schrittweise steigenden Temperaturen jeweils 1 Stunde lang mit 50 g/cm$^2$ belastet. Als Blockpunkt wird die Temperatur bezeichnet, bei der sich die Beschichtung gerade noch ohne Beschädigung der Oberfläche wieder trennen läßt.

    Die Dispersionsfarben werden mit einer Trockenschichtdicke von 50 bis 70 um auf eine mit einem handelsüblichen Alkydharzlack beschichtete PVC-Folie aufgetragen und 7 Tage bei 23 Grad C und 50 % rel. Luftfeuchtigkeit getrocknet.

    Die Haftfestigkeit des Überzugs wird nach dem Gitterschnitt-Tests gemäß DIM 53 151 geprüft. Die Prüfbedingungen werden zusätzlich verschärft, indem man auf die Prüffläche ein Haftklebeband aufbringt und wieder ruckartig abzieht. Der mit diesem Test ermittelte Wert wird als "Trockenhaftung" bezeichnet.

    Zur Bestimmung der sogenannten "Naßhaftung" wird der Gitterschnitt-Test gemäß DIN 53 151 nach einer vorangegangenen Wechselbeanspruchung von 8 Stunden Wasserlagerung bei 23 Grad C und anschließender 16-stündiger Kältelagerung bei -20 Grad C durchgeführt. Wenn nach 5 derartigen Zyklen keine Blasenbildung und keine Abplatzungen des Anstrichs erkenbar sind, wird im noch gequollenen sowie im trocknen Zustand der Gitterschnitt-Test durchgeführt.

Die Prüfungsergebnisse sind in Tabelle 2 zusammengefaßt.

TABELLE 2

| Beispiele Nr. | Glanz* | Blockpunkt | Trocken-haftung | Verlauf visuell | Nasshaftung | | Gitterschnitt** | |
|---|---|---|---|---|---|---|---|---|
| | | | | | Blasenbildung | Abplatzen | trocken | nass |
| 1 | 81 % | 80-90 °C | Gt 0/0 | sehr gut | keine | kein | Gt 0/0 | Gt 0/0 |
| 2 | - | 70 °C | - | sehr gut | - | - | - | - |
| 3 | 78 % | 70-90 °C | Gt 0/0 | sehr gut | keine | kein | Gt 0/0 | Gt 0/0 |
| 4 | 79 % | 70-80 °C | GT 0/0 | sehr gut | keine | kein | Gt 0/0 | Gt 0/0 |

\* Gardner-Glanzmeßgerät, Meßwinkel 60 °

\*\* Bewertung des Gitterschnitt-Tests:
Die erste Ziffer zeigt in einer von 0 bis 4 gehenden Bewertungsskala abnehmende Haftfestigkeit an. Die zweite Ziffer gibt in gleicher Weise die Haftung nach Aufkleben und Abreißen eines Haftklebebandes an.

**Patentansprüche**

1. Bindemittel für wäßrige Glanzfarben, enthaltend in einer wäßrigen Phase dispergierte Teilchen eines mehrphasigen Emulsionspolymerisats, das aus

8

a) einem Kernmaterial mit einer Glasübergangstemperatur über 40°C und

b) einem Schalenmaterial mit einer Glasübergangstemperatur unter 70°C, jedoch mindestens 20 K unter der des Kernmaterials,

aufgebaut ist,

dadurch gekennzeichnet,

daß die Teilchen einen mittleren Durchmesser unter 200 nm haben und am Aufbau des Schalenmaterials ein Emulsionspolymerisat mit wenigstens 4 Gew.-% einer äthylenisch ungesättigten, radikalisch polymerisierbaren Carbonsäure und mehr als 80 Gew.-% eines oder mehrerer Monomerer der Gruppe Styrol und Alkylester der Acryl- und/oder Methacrylsäure mit mindestens 4 Kohlenstoffatomen im Alkylrest beteiligt ist.

2. Bindemittel nach Anspruch 1, dadurch gekennzeichnet, daß am Aufbau des Schalenmaterials ein stickstoffhaltiges Haftmonomer beteiligt ist.

3. Bindemittel nach Anspruch 2, dadurch gekennzeichnet, daß das Schalenmaterial aus zwei Emulsionspolymerisaten besteht, von denen das eine die überwiegende Menge der Einheiten einer äthylenisch ungesättigten, radikalisch polymerisierbaren Carbonsäure und das andere die überwiegende Menge der Einheiten des Haftmonomeren enthält.

4. Bindemittel nach Anspruch 2 oder 3, dadurch gekennzeichnet, daß es als Haftmonomer Einheiten eines äthylenisch ungesättigten, radikalisch polymerisierbaren Monomers mit einer Amino-, Ureido- oder N-heterocyclischen Gruppe enthält.

5. Verfahren zur Herstellung von Bindemitteln für wäßrige Glanzfarben durch mehrstufige radikalische Emulsionspolymerisation in wäßriger Phase, wobei man

a) in der ersten Stufe ein Monomer oder ein Monomerengemisch polymerisiert, welches ein Kernmaterial mit einer Glasübergangstemperatur über 40°C ergibt und

b) in den nachfolgenden Stufen zur Bildung eines Schalenmaterials ein oder mehrere Monomerengemische polymerisiert, welches ein Emulsionspolymerisat mit einer Glasübergangstemperatur unter 70°C, jedoch mindestens 20 K unter der des Kernmaterials, ergibt,

dadurch gekennzeichnet,

daß man zu Beginn der ersten Stufe die Emulgatorkonzentration so wählt, daß die fertigen Latexteilchen einen mittleren Durchmesser unter 200 nm haben und daß man in den auf die erste Stufe folgenden Stufen ein Monomerengemisch polymerisiert, welches wenigstens 4 Gew.-% einer äthylenisch ungesättigten, radikalisch polymerisierbaren Carbonsäure und mehr als 80 Gew.-% eines oder mehrerer Monomerer der Gruppe Styrol und Alkylester der Acryl- und/oder Methacrylsäure mit mindestens 4 Kohlenstoffatomen im Alkylrest enthält.

6. Verfahren nach Anspruch 5, dadurch gekennzeichnet, daß man einem Monomerengemisch zur Bildung des Schalenmaterials eine wirksame Menge eines Haftmonomeren zusetzt.

7. Verfahren nach Anspruch 6, dadurch gekennzeichnet, daß bei der Herstellung des Schalenmaterials die ungesättigte Carbonsäure in einem begrenzten Zeitabschnitt während der Polymerisation des Monomerengemisches in entsprechend höherer Konzentration zugesetzt wird.

8. Verfahren nach Anspruch 6 oder 7, dadurch gekennzeichnet, daß die Emulsionspolymerisation in drei Stufen durchgeführt wird, wobei zur Bildung des Schalenmaterials in der zweiten Stufe ein Monomerengemisch polymersiert wird, welches die überwiegende oder gesamte Menge der ungesättigten Carbonsäure enthält, und in der dritten Stufe ein Monomerengemisch polymerisiert wird, welches die überwiegende oder gesamte Menge des Haftmonomeren enthält.

9. Verfahren nach einem oder mehreren der Ansprüche 5 bis 8, dadurch gekennzeichnet, daß bei der Bildung des Kernmaterials ein Monomerengemisch polymerisiert wird, das ein mehrfach äthylenisch ungesättigtes, radikalisch polymerisierbares Monomer enthält.

**Claims**

1. A binding agent for aqueous gloss paints containing, in an aqueous phase, dispersed particles of a multi-phase emulsion polymer synthesised from
   a) a core material with a glass transition temperature above 40°C and
   b) a shell material with a glass transition temperature below 70°C, but at least 20 K below that of the core material,
   characterized in that
   the particles have an average diameter of less than 200 nm and that an emulsion polymer with at least 4 wt.% of an ethylenically unsaturated radically polymerisable carbonic acid and more than 80 wt.% of one or more monomers of the group of styrene and alkyl ester of acrylic and/or methacrylic acid, having at least 4 carbon atoms in the alkyl group, forms part of the composition of the shell material.

2. A binding agent according to claim 1, characterized in that a nitrogen-containing adherent monomer forms part of the composition of the shell material.

3. A binding agent according to claim 2, characterized in that the shell material consists of two emulsion polymers, one of which contains the main amount of the units of an ethylenically unsaturated, radically polymerisable carbonic acid and the other the main amount of the units of the adherent monomer.

4. A binding agent according to claim 2 or 3, characterized in that it contains units of an ethylenically unsaturated, radically polymerisable monomer with an amino-, ureido- or N-heterocyclic group as adherent monomer.

5. A process for preparing binding agents for aqueous gloss paints by a multi-stage radical emulsion polymerisation in an aqueous phase whereby,
   a) in the first stage, a monomer or a monomer mixture is polymerised producing a core material with a glass transition temperature above 40°C and,
   b) in the following stages, in order to form a shell material, one or more polymer mixtures are polymerised, producing an emulsion polymer with a glass transition temperature below 70°C, but at least 20 K below that of the core material,
   characterized in that
   at the beginning of the first stage, the emulsifier concentration is chosen such that the finished latex particles have an average diameter of less than 200 nm and that in the stages following the first one, a monomer mixture is polymerised which contains at least 4 wt.% of an ethylenically unsaturated, radically polymerisable carbonic acid and more than 80% of one or more monomers of the group of styrene and alkyl ester of acrylic and/or methacrylic acid having at least 4 carbon atoms in the alkyl group.

6. A process according to claim 5, characterized in that an effective amount of an adherent monomer is added to a monomer mixture in order to produce the shell material.

7. A process according to claim 6, characterized in that, when preparing the shell material, the unsaturated carbonic acid is added in a correspondingly higher concentration for a limited period during the polymerisation of the monomer mixture.

8. A process according to claim 6 or 7, characterised in that the emulsion polymerisation is carried out in three stages whereby, in order to produce the shell material, a monomer mixture which contains the main or entire amount of the unsaturated amount of the carbonic acid is polymerised in the second stage and a monomer mixture is polymerised in the third stage which contains the main or entire amount of the adherent monomer.

9. A process according to one or more of claims 5 to 8, characterised in that, when producing a core material, a monomer mixture is polymerised which contains a polyethylenically-unsaturated radically polymerisable monomer.

**Revendications**

1. Liant pour encres aqueuses brillantes, contenant des particules, dispersées dans une phase aqueuse, d'un produit de polymérisation en émulsion à plusieurs phases qui se compose

   a) d'une matière de noyau ayant une température de transition vitreuse supérieure à 40°C et

   b) d'une matière d'enveloppe ayant une température de transition vitreuse inférieure à 70°C, mais inférieure d'au moins 20 K à celle de la matière de noyau,

   caractérisé en ce que les particules ont un diamètre moyen inférieur à 200 nm et en ce que participe à la constitution de la matière d'enveloppe un produit de polymérisation en émulsion contenant au moins 4% en poids d'un acide carboxylique à insaturation éthylénique susceptible de polymèrisation radicalaire et plus de 80% en poids d'un ou de plusieurs monomères du groupe du styrène et des esters alkyliques de l'acide acrylique et/ou méthacrylique renfermant au moins 4 atomes de carbone dans le reste alkyle.

2. Liant selon la revendication 1, caractérisé en se qu'un monomère de cohésion azoté participe à la constitution de la matière d'enveloppe.

3. Liant selon la revendication 2, caractérisé en ce que la matière d'enveloppe se compose de deux produits de polymérisation en émulsion, dont l'un contient en quantité prédominante les motifs d'un acide carboxylique à insaturation éthylénique, susceptible de polymérisation radicalaire, et l'autre contient en quantité prédominante les motifs du monomère de cohésion.

4. Liant selon la revendication 2 ou 3, caractérisé en ce qu'il contient, en tant que monomère de cohésion, des motifs d'un monoméreà insaturation éthylénique, susceptible de polymérisation radicalaire, renfermant un groupement amino, uréido ou N-hétérocyclique.

5. Procédé de préparation de liants pour des encres aqueuses brillantes par polymérisation en émulsion radicalaire en plusieurs étapes en phase aqueuse, dans lequel

   a) on polymérise, dans la première étape, un monomère ou un mélange de monomères qui donne une matière de noyau ayant une température de transition vitreuse supérieure a 40°C et

   b) on polymérise dans les étapes suivantes, pour la formation d'une matière d'enveloppe, un ou plusieurs mélanges de monomères qui donnent un produit de polymérisation en émulsion ayant une température de transition vitreuse inférieure a 70°C, mais inférieure d'au moins 20 K à celle de la matière de noyau,

   caractérisé en ce qu'au début de la première étape, on choisit la concentration d'émulsionnant de sorte que les particules de latex finales aient un diamètre moyen inférieur à 200 nm, et en ce qu'on polymérise, dans les étapes faisant suite à la première étape, un mélange de monomères qui contient au moins 4% en poids d'un acide carboxylique à insaturation éthylénique susceptible de polymérisation radicalaire et plus de 80% en poids d'un ou de plusieurs monomères du groupe du styrène et des esters alkyliques de l'acide acrylique et/ou méthacrylique renfermant au moins 4 atomes de carbone dans le reste alkyle.

6. Procédé selon la revendication 5, caractérisé en ce qu'on ajoute, à un mélange de monomères, pour la formation de la matière d'enveloppe, une quantité efficace d'un monomère de cohésion.

7. Procédé selon la revendication 6, caractérisé en ce qu'au cours de la préparation de la matière d'enveloppe, l'acide carboxylique insaturé est ajouté dans un laps de temps limité pendant la polymérisation du mélange de monomères, en une concentration augmentée en conséquence.

8. Procédé selon la revendication 6 ou 7, caractérisé en ce que la polymérisation en émulsion est conduite en trois étapes au cours desquelles, pour la formation de la matière d'enveloppe, on polymérise, dans la deuxième étape, un mélange de monomères qui contient la quantité prépondérante ou totale de l'acide carboxylique insaturé et, dans la troisième étape, on polymérise un mélange de monomères qui contient la quantité prépondérante ou totale du monomère de cohésion.

9. Procédé selon l'une quelconque des revendications 5 à 8, caractérisé en ce que, pour la formation de la matière de noyau, on polymérise un mélange de monomères qui contient un monomère a plusieurs insaturations éthyléniques, susceptible de polymérisation radicalaire.